# EUROPÄISCHE PATENTSCHRIFT

(11) **EP 3 572 739 B1**
(45) Veröffentlichungstag und Bekanntmachung des Hinweises auf die Patenterteilung: **31.05.2023**
(21) Anmeldenummer: 19175838.2
(22) Anmeldetag: 22.05.2019
(51) Int. Cl.: F24F 13/02, F24F 110/40

(54) **DURCHLASS EINER KLIMATECHNISCHEN ANLAGE ZUR BE- UND/ODER ZUR ENTLÜFTUNG VON RÄUMEN**
FEEDTHROUGH OF AN AIR CONDITIONING ASSEMBLY FOR THE VENTILATION OF ROOMS
PASSAGE D'UNE INSTALLATION TECHNIQUE DE CLIMATISATION DESTINÉ À L'AÉRATION ET / OU À LA VENTILATION DES ESPACES

(30) Priorität: 22.05.2018 DE 202018102853 U
(43) Veröffentlichungstag der Anmeldung: 27.11.2019
(73) Patentinhaber: TROX GmbH, 47506 Neukirchen-Vluyn (DE)
(72) Erfinder: Leitner, Daniel, 47918 Tönisvorst (DE); Scherder, Dirk, 47506 Neukirchen-Vluyn (DE)
(74) Vertreter: Dr. Stark & Partner Patentanwälte mbB

(56) Entgegenhaltungen:
- DE-A1- 10 315 241
- DE-U1-202017 101 384
- DE-U1-202018 101 015
- US-A1- 2002 042 983
- US-A1- 2016 003 384

## Beschreibung

Die Erfindung betrifft einen Durchlass einer klimatechnischen Anlage zur Be- und/oder zur Entlüftung von Räumen umfassend eine Frontplatte, mit einer Vorderseite, mit einer Rückseite und mit zumindest einer Durchströmöffnung sowie eine Haltekonstruktion, wobei die Frontplatte mittels zumindest eines Befestigungsmittels an der Haltekonstruktion befestigt ist, wobei die Frontplatte zumindest einen durchgehenden Durchströmkanal mit zwei Durchströmkanalenden aufweist, wobei ein Durchströmkanalende eines Durchströmkanals als außenseitiges Durchströmkanalende auf der Frontplattenvorderseite angeordnet ist und das andere Durchströmkanalende als innenseitiges Durchströmkanalende auf der Frontplattenrückseite angeordnet ist.

In der Praxis werden mehrere Durchlässe an einer gemeinsamen Zu- oder Abluftleitung angeschlossen. Nach der Installation der Durchlässe und vor der Inbetriebnahme müssen an jedem Durchlass die Volumenströme gemessen und die Volumenströme für jeden Durchlass beispielsweise über eine dem jeweiligen Durchlass zugeordnete Drosselklappe eingestellt werden. Für die Messung muss an zwei verschiedenen Stellen der Druck bestimmt und daraus dann die Druckdifferenz ermittelt werden. Unter Berücksichtigung einer dem Durchlass spezifischen Konstante kann dann der Volumenstrom ermittelt werden. Nachteilig ist, dass die Messung insoweit problematisch ist, da für eine Messung ein Ende eines Schlauches durch eine Durchströmöffnung freihändig in den Durchlass geführt wird. Damit ist das Schlauchende nie an der gleichen Stelle, was das Ergebnis verfälscht. Im Übrigen ist teilweise auch das Einführen schwierig, da die Frontplatte beispielsweise Schaufeln aufweisen kann, so dass das Ende des Schlauches umgelenkt wird.

Aus der DE 20 2017 101 384 U1 ist ein System zur lösbaren Befestigung eines Bauteils einer klima- und raumlufttechnischen Anlage bekannt. Die DE 20 2018 101 015 U1 beschreibt eine lufttechnische Einrichtung zur Verwendung in einer klimatechnischen Anlage. DE 103 15 241 A1 offenbart einen Durchlass welches als reine Messstelle geeignet ist.

Aufgabe der Erfindung ist es, die vorgenannten Nachteile zu vermeiden und einen Durchlass anzugeben, der eine einfache Messung des Druckes zum Zwecke der anschließenden Bestimmung des Volumenstroms ermöglicht. Diese Aufgabe wird dadurch gelöst, dass zumindest ein Durchströmkanal als Durchgang durch ein Befestigungsmittel gebildet ist. Dabei ist vorzugsweise zumindest ein Durchströmkanal als axialer Durchgang durch ein Befestigungsmittel gebildet. Jedes Durchströmkanalende kann vollständig geöffnet sein. Es ist aber auch durchaus möglich, dass im Bereich des Durchströmkanalendes beispielsweise ein Sieb unter Bildung einer Vielzahl an Öffnungen vorgesehen ist. Es ist aber auch durchaus möglich, dass sich das innenseitige Durchströmkanalende in mehrere, beispielweise seitlich angeordnete, innenseitige Durchströmkanalteilenden verzweigt und/oder dass sich das außenseitige Durchströmkanalende in mehrere, beispielweise seitlich angeordnete, außenseitige Durchströmkanalteilenden verzweigt.

Bei der Montage wird zunächst die Frontplatte mittels des Befestigungsmittels an der Haltekonstruktion befestigt. Dann kann eine der beiden Messstellen eines Messgerätes mit dem außenseitigen Durchströmkanalende des Befestigungsmittels verbunden werden. Die Position des Befestigungsmittels ist bei allen Durchlässen des gleichen Typs identisch. Sofern bei allen Durchlässen des gleichen Typs der Durchströmkanal als axialer Durchgang durch ein Befestigungsmittel gebildet ist, erstreckt sich in allen Fällen der Durchströmkanal axial. Über die zweite Messstelle kann der Druck an einer anderen Stelle gemessen werden. Nach erfolgter Messung und gegebenenfalls erforderlicher Einstellung des Durchlasses muss lediglich die Verbindung zwischen dem au-ßenseitigen Durchströmkanalende und der Messstelle entfernt werden und der Durchlass kann wie ein bisher bekannter Durchlass verwendet werden.

Die erfindungsgemäße Ausgestaltung erlaubt zum einen eine schnelle Messung. Da immer an der gleiche Stelle bezogen auf den Strömungsquerschnitt des Durchlasses gemessen wird und in allen Fällen der Durchströmkanal die gleiche Ausrichtung hat, können zum anderen aussagekräftige Messergebnisse erzielt werden. Diese erlauben eine sehr genaue Einstellung mehrerer, an einer gemeinsamen Zu- oder Abluftleitung angeschlossener Durchlässe.

Der Durchströmkanal kann komplett frei sein, so dass dann ein gasförmiges Medium hindurchströmt. Es ist aber auch denkbar, dass in dem Durchströmkanal beispielsweise eine Membran angeordnet ist und mittels einer geeigneten Einrichtung die Auslenkung der Membran, die Rückschlüsse auf den herrschenden Druck erlaubt, bestimmt wird.

Der Durchlass ist an ein Lüftungssystem in einem Gebäude angeschlossen. Ein Durchlass stellt eine endseitige Komponente dar, die beispielsweise in einer Decke eines Raumes installiert ist. Über den Durchlass kann Zuluft in den Raum geblasen oder Abluft aus dem Raum abgeführt werden. Die Frontplatte kann als Frontblech, als Drallscheibe oder dergleichen ausgebildet sein. Als Haltekonstruktion kann beispielsweise eine Traverse vorgesehen sein, die beispielsweise einer klimatechnischen Komponente, beispielsweise in einem Gehäuse oder einem Anschlusskasten angeordnet ist.

Das Befestigungsmittel kann zumindest die Frontplatte durchfassen. Bei einer solchen Ausgestaltung kann das Befestigungsmittel beispielsweise als Hohlniet ausgebildet sein.

Das Befestigungsmittel kann zumindest die Haltekonstruktion durchfassen. Dann weist die Haltekonstruktion beispielweise eine Ausnehmung auf, in die beispielsweise eine Hohlniet hineingreift.

Zumindest ein Befestigungsmittel kann als Hohlschraube mit einem Schraubenkopf und einer Schraubenspitze ausgebildet sein, wobei das außenseitige Durchströmkanalende im Schraubenkopf angeordnet ist. Die Hohlschraube kann beispielsweise als Mittelschraube dienen. Die Hohlschraube kann zumindest in dem mit der Haltekonstruktion zusammenwirkenden Bereich ein Außengewinde aufweisen. Die Hohlschraube kann aber auch nach dem Bajonettprinzip mit der Haltekonstruktion zusammenwirken. Dann kann die Hohlschraube beispielsweise einen seitlich vorstehenden Vorsprung aufweisen, der nach Verdrehen mit einer korrespondierenden Aufnahme in Eingriff bringbar ist oder einen Randbereich der Haltekonstruktion seitlich hintergreift.

Das innenseitige Durchströmkanalende kann in der Schraubenspitze vorgesehen sein.

Das Befestigungsmittel kann einen im montierten Zustand der Frontplatte von außen zugänglichen Betätigungsbereich aufweisen. Das Befestigungsmittel ist im montierten Zustand der Frontplatte von außen zugänglich. Sofern das Befestigungsmittel als Hohlschraube ausgebildet ist, stellt der Schraubenkopf der Hohlschraube den Betätigungsbereich dar.

Das außenseitige Durchströmkanalende kann in dem Betätigungsbereich angeordnet sein. Sofern das Befestigungsmittel als Hohlschraube mit einem Schraubenkopf ausgebildet ist, stellt der Schraubenkopf den Betätigungsbereich dar. In dem Schraubenkopf, der eine geeignete Ausgestaltung, beispielsweise einen Schlitz, zum Ansetzen eines Werkzeuges aufweisen kann, ist dann das außenseitige Durchströmkanalende vorgesehen.

Der Durchströmkanal kann zumindest in dem, sich an das außenseitige Durchströmkanalende anschließenden Bereich ein Innengewinde aufweisen. Dies erlaubt ein Hereindrehen eines länglichen Hohlelementes beispielsweise eines Zwischenelementes, das ein korrespondierendes Außengewinde aufweist.

Das außenseitige Durchströmkanalende kann durch eine Verschließeinrichtung, vorzugsweise eine als Kappe ausgebildete Verschließeinrichtung, verschließbar sein. Damit ist der Durchströmkanal lufttechnisch verschlossen und auch optisch verdeckt.

Die Erfindung betrifft auch ein System umfassend einen Durchlass und einen Schlauch, wobei der Durchlass nach einem der Ansprüche ausgebildet ist und dass ein Zwischenelement zur dichtenden Anbringung des Schlauches an einem Befestigungsmittel vorgesehen ist. Das Zwischenelement muss lediglich, vorzugsweise werkzeuglos, mit dem außenseitigen Durchströmkanalende des Befestigungsmittels verbunden werden. Die Verbindung kann - sofern sie nicht mehr benötigt wird - wieder einfach gelöst werden.

Das Zwischenelement kann beispielsweise aus Kunststoff bestehen.

Das Zwischenelement kann im Bereich des mit dem Befestigungsmittel zusammenwirkenden Endes ein längliches Hohlelement aufweisen, das sich im befestigten Zustand in dem Durchströmkanal befindet. Das längliche Hohlelement ist im Bereich seines freien, in dem Durchströmkanal befindlichen Endes offen. Der Durchmesser des länglichen Hohlelementes ist etwas geringer als der Innendurchmesser des Durchströmkanals. Das längliche Hohlelement kann beispielsweise eine runde oder eine eckige Außenkontur aufweisen und ist vorzugsweise an die Innenkontur des Durchströmkanals angepasst. Sofern die Innenkontur des Durchströmkanals beispielsweise rund ist, ist die Außenkontur des länglichen Hohlelementes vorzugsweise auch rund. Das längliche Hohlelement und das Zwischenelement können beispielsweise einteilig ausgebildet sein. Dann bestehen sie aus demselben Material, wie beispielsweise Kunststoff.

Das längliche Hohlelement kann eine umlaufende, ringförmig ausgebildete Dichtung aufweisen. Mittels der Dichtung wird das längliche Hohlelement gegenüber der Innenwandung des Durchströmkanals abgedichtet.

Das Zwischenelement zur Befestigung in Relation zu dem Befestigungsmittel kann zumindest einen Magneten aufweisen, und die Frontplatte kann zumindest in jedem mit einem Magneten zusammenwirkenden Bereich aus einem ferromagnetischen Material bestehen und/oder die Hohlschraube kann aus einem ferromagnetischen Material bestehen. Die Frontplatte kann beispielsweise vollständig aus dem vorgenannten Material bestehen. Es ist aber auch durchaus möglich, dass die Frontplatte mit einem entsprechenden Material versehen ist.

Das Zwischenelement zur Befestigung in Relation zu dem Befestigungsmittel kann auch selbst als Magnet ausgebildet sein, und die Hohlschraube kann aus einem ferromagnetischen Material bestehen.

Der mit dem Befestigungsmittel zusammenwirkende Bereich des Zwischenelementes kann der Form und/oder der Ausgestaltung des korrespondierenden Bereichs, vorzugsweise des Betätigungsbereichs, des Befestigungsmittels angepasst sein. Bei einer solchen Ausgestaltung kann das Zwischenelement nach Art eines Bits ausgebildet sein. Weist das Befestigungsmittel beispielsweise einen Betätigungsbereich mit einem Kreuzschlitz auf, wobei das außenseitige Durchströmkanalende beispielsweise in der Mitte des Kreuzschlitzes angeordnet ist, weist der mit dem Befestigungsmittel zusammenwirkende Bereich des Zwischenelementes ebenfalls eine mit dem Kreuzschlitz korrespondierende Ausgestaltung aus. Damit kann das Befestigungsmittel gut betätigt werden. Die korrespondierende Ausgestaltung bewirkt ferner eine dichtende Befestigung.

Das Zwischenelement kann alternativ auch mit einem Bajonettverschluss in Relation zu dem Befestigungsmittel befestigbar sein.

Das Zwischenelement kann alternativ auch mittels einer Rastverbindung gegenüber dem Befestigungsmittel befestigbar sein.

Hierzu kann das Zwischenelement zumindest zwei, vorzugsweise im Abstand zueinander, und aufeinander zuweisende Rastelemente aufweisen, die im befestigten Zustand zumindest einen Teilbereich des Befestigungsmittels bzw. einen Teilbereich der Frontplatte rastend hintergreifen.

Das Zwischenelement kann zur Befestigung in Relation zu dem Befestigungsmittel wenigstens zwei, gegen eine Rückstellkraft voneinander weg verlagerbare Klemmarme zur seitlichen Klemmung eines Teilbereichs der Frontplatte oder des Befestigungsmittels aufweisen.

Das Zwischenelement kann alternativ zur Befestigung in Relation zu dem Befestigungsmittel eine Klemme umfassend zwei zwischen sich einen schlitzförmigen Aufnahmebereich bildende Klemmschenkel aufweisen.

Dabei kann das Zwischenelement im Bereich des mit dem Befestigungsmittel zusammenwirkenden Endes ein längliches, ein Außengewinde aufweisendes Hohlelement aufweisen. Sofern der Durchströmkanal in dem, sich an das außenseitige Durchströmkanalende anschließenden Bereich ein Innengewinde aufweist, kann das längliche und das Außengewinde aufweisende Hohlelement des Zwischenelementes in den Durchströmkanal eingeführt und hier verschraubt werden.

Das Zwischenelement kann einen Anschlussstutzen zum Anschluss eines Schlauches aufweisen.

Im Folgenden werden in den Zeichnungen dargestellte Ausführungsbeispiele der Erfindung erläutert. Es zeigen:
- Fig.1: einen Schnitt durch einen Durchlass umfassend eine Frontplatte sowie eine Haltekonstruktion,
- Fig.2: das Detail "X" aus Fig. 1,
- Fig. 3: das erfindungsgemäße System mit einem angeschlossenen Messgerät,
- Fig. 4: einen Schnitt durch den Endbereich einer Hohlschraube mit einer darauf aufgesteckten Zierkappe,
- Fig. 5: einen Schnitt durch den Endbereich einer Hohlschraube und ein darauf befestigtes Zwischenelement mit einem länglichen Hohlelement,
- Fig. 6: einen Schnitt durch den Endbereich einer Hohlschraube und ein einen Magneten aufweisendes Zwischenelement,
- Fig. 7: einen Schnitt durch den Endbereich einer Hohlschraube und ein Rastelemente aufweisendes Zwischenelement,
- Fig. 8: einen Schnitt durch den Endbereich einer Hohlschraube und ein in ein Innengewinde der Hohlschraube eingeschraubtes Zwischenelement,
- Fig. 9: einen Schnitt durch den Endbereich einer Hohlschraube und ein Zwischenelement, das ein nach Art einer Gummitülle ausgebildetes längliches Hohlelement aufweist,
- Fig. 10: eine schräge Draufsicht auf den Gegenstand nach Fig. 9 im an dem Befestigungsmittel befestigten Zustand,
- Fig. 11: einen Schnitt durch den Endbereich einer Hohlschraube und den Gegenstand nach Fig. 10,
- Fig. 12: einen Schnitt durch den Endbereich einer Hohlschraube und ein eine seitliche Klemme aufweisendes Zwischenelement,
- Fig. 13: einen Schnitt durch den Endbereich einer Hohlschraube und ein eine variable Klemmung ermöglichendes Zwischenelement und
- Fig. 14: ein anderes Ausführungsbeispiel eines als Hohlschraube ausgebildeten Befestigungsmittels.

In allen Figuren werden für gleiche bzw. gleichartige Bauteile übereinstimmende Bezugszeichen verwendet.

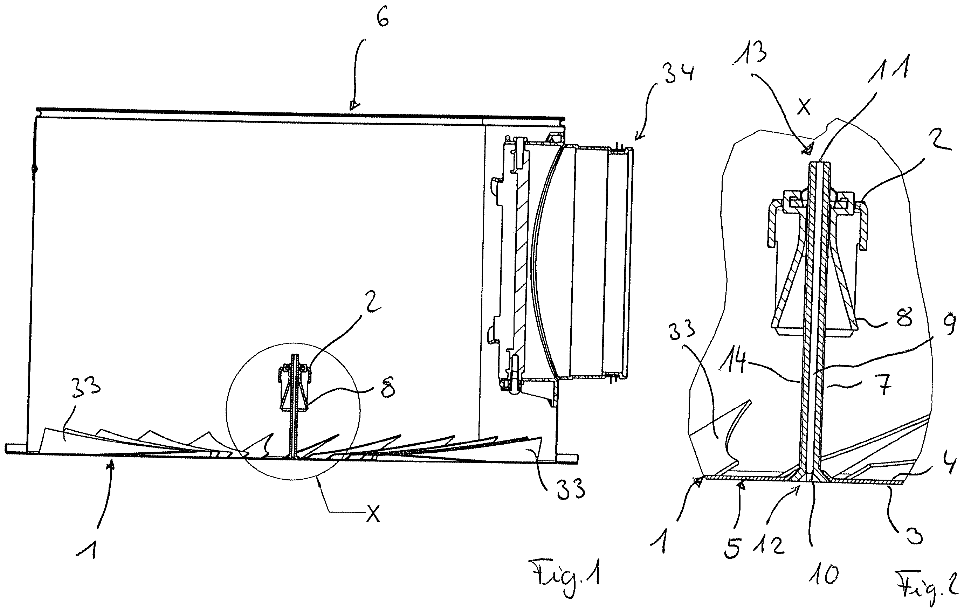

Fig.1 zeigt einen Schnitt durch einen Durchlass einer klimatechnischen Anlage zur Be- und/oder zur Entlüftung von Räumen umfassend eine Frontplatte 1 sowie eine Haltekonstruktion 2. Die Frontplatte 1 hat eine Vorderseite 3, eine Rückseite 4 und Durchströmöffnungen 5. Jede Durchströmöffnung 5 bildet einen Durchströmkanal mit zwei Durchströmkanalenden. In dem dargestellten Ausführungsbeispiel ist die Frontplatte 1 als Drallplatte ausgebildet, so dass insoweit jeder Durchströmöffnung 5 eine Drallschaufel 33 zugeordnet ist.

Die Haltekonstruktion 2 ist in dem dargestellten Ausführungsbeispiel als Traverse ausgebildet, die sich zwischen zwei gegenüberliegenden Wänden eines Anschlusskastens 6 erstreckt. Der Anschlusskasten 6 ist über einen Stutzen 34 an eine nicht dargestellte klimatechnische Anlage zur Be- und/oder zur Entlüftung von Räumen angeschlossen.

In der Traverse ist eine Öffnung, in die ein als Hohlschraube ausgebildetes Befestigungsmittel 7 eingeschraubt werden kann, vorgesehen. Der Öffnung ist ein in Einführrichtung gesehen trichterförmig zusammenlaufender Einführbereich 8 zugordnet, der das Einführen des freien Endes des Befestigungsmittels 7 bei der Montage erleichtert.

Die Frontplatte 1 ist mittels des als Hohlschraube ausgebildeten Befestigungsmittels 7 an der Haltekonstruktion 2 befestigt. Die beispielsweise in Fig. 1 dargestellte Hohlschraube bildet einen als axialen Durchgang ausgebildeten Durchströmkanal 9 mit einem außenseitigen Durchströmkanalende 10, das auf der Vorderseite 3 der Frontplatte 1 angeordnet ist, und mit einem innenseitigen Durchströmkanalende 11, das auf der Rückseite 4 der Frontplatte 1 angeordnet ist.

Die Hohlschraube weist einen Schraubenkopf 12, der einen Betätigungsbereich bildet, und eine Schraubenspitze 13 auf, wobei das außenseitige Durchströmkanalende 10 im Schraubenkopf 12 angeordnet und das innenseitige

Durchströmkanalende 11 in der Schraubenspitze 13 vorgesehen ist. In dem Schraubenkopf 12 kann beispielsweise ein Schlitz oder ein Kreuzschlitz zum Ansetzen eines Werkzeuges vorgesehen sein. Die Hohlschraube weist ein Außengewinde 14 auf. Das als Hohlschraube ausgebildete Befestigungsmittel 7 durchfasst die Frontplatte 1 und die Haltekonstruktion 2.

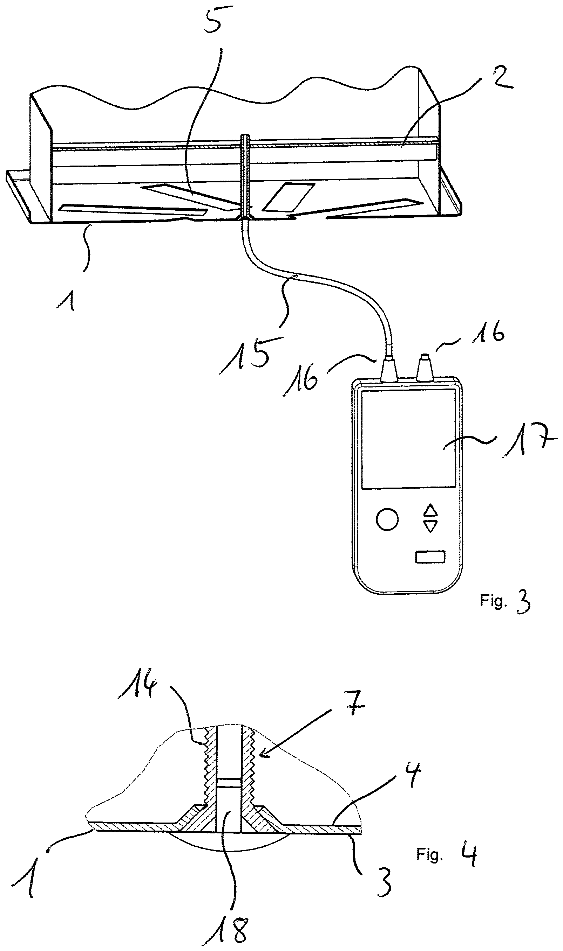

In Fig. 3 ist der grundsätzliche Aufbau des erfindungsgemäßen Systems dargestellt, wobei zusätzlich ein Schlauch 15 angedeutet ist, der das außenseitige Durchströmkanalende 10 mit einem der beiden Messstellen 16 eines Messgerätes 17 verbindet.

Fig. 4 zeigt den Endbereich einer Hohlschraube, der mit einer aufgesteckten als Kappe ausgebildeten Verschließeinrichtung 18 verschlossen ist. Damit ist der Durchströmkanal 9 lufttechnisch verschlossen und auch optisch verdeckt. Der Betätigungsbereich des Befestigungsmittels 7 ist im montierten Zustand der Frontplatte 1 von außen zugänglich.

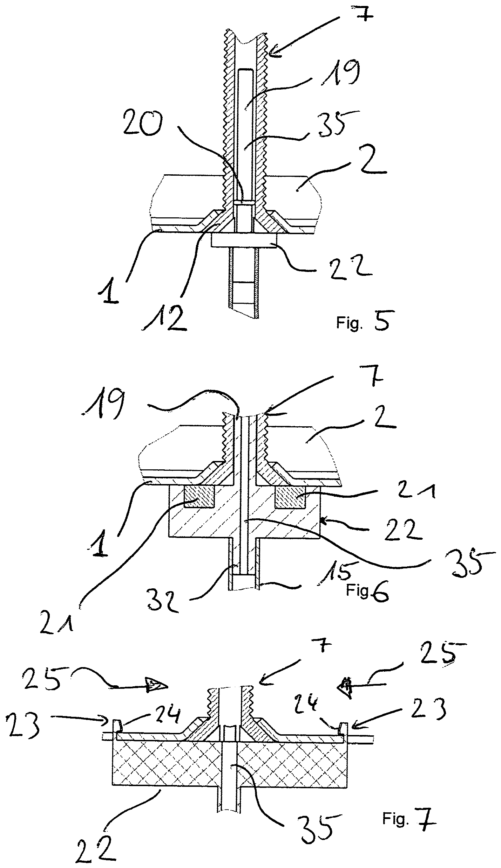

Das in Fig. 5 dargestellte Zwischenelement weist im Bereich des mit dem Befestigungsmittel 7 zusammenwirkenden Endes ein längliches Hohlelement 19 auf. Im befestigten Zustand befindet sich das längliche Hohlelement 19 in dem Durchströmkanal 9. Das längliche Hohlelement 19 ist im Bereich seines freien, in dem Durchströmkanal 9 befindlichen Endes offen ausgebildet. Der Durchmesser des länglichen Hohlelementes 19 ist etwas geringer als der Innendurchmesser des Durchströmkanals 9. Die Innenkontur des Durchströmkanals 9 ist in dem dargestellten Ausführungsbeispiel rund und die Außenkontur des länglichen Hohlelementes 19 ist ebenfalls entsprechend rund ausgebildet. Das längliche Hohlelement 19 weist eine umlaufende und ringförmig ausgebildete Dichtung 20 auf. Mittels der Dichtung 20 wird das längliche Hohlelement 19 gegenüber der Innenwandung des Durchströmkanals 9 abgedichtet.

Bei dem in Fig. 5 dargestellten Ausführungsbeispiel befindet sich das Ende des länglichen Hohlelementes 19 in dem Durchströmkanal 9. Es ist aber auch durchaus möglich, dass das längliche Hohlelement 19 der Länge des Durchströmkanals 9 entspricht oder länger als der Durchströmkanal 9 ist. Im letztgenannten Fall ragt das offene Ende des länglichen Hohlelementes 19 aus dem Durchströmkanal 9 heraus.

Das längliche Hohlelement 19 kann starr sein. Es ist aber auch durchaus möglich, dass das längliche Hohlelement 19 nach Art eines Schlauches flexibel oder biegsam ist und damit auch beispielsweise in einen gebogen ausgebildeten Durchströmkanal 9 eingeschoben werden kann.

In Fig. 6 ist ein Magneten 21 aufweisendes Zwischenelement 22 dargestellt. Aufgrund der Anordnung der Magneten 21 besteht in diesem Ausführungsbeispiel jeder mit einem Magneten 21 zusammenwirkende Bereich der Frontplatte 1 aus einem ferromagnetischen Material. Auch das als Hohlschraube ausgebildete Befestigungsmittel 7 ist aus einem ferromagnetischen Material.

Fig. 7 zeigt eine Variante, bei der das Zwischenelement 22 zwei im Abstand zueinander und aufeinander zuweisende Rastelemente 23 aufweist. Jedes Rastelement 23 weist auf seiner dem anderen Rastelement 23 zugewandten Seite eine Rastnase 24 auf. Jedes Rastelement 23 ist gegen eine in Richtung des Pfeils 25 wirkende Rückstellkraft von dem gegenüberliegenden Rastelement 23 verlagerbar. Im befestigten Zustand hintergreift jedes Rastelement 23 mit seiner Rastnase 24 einen Teilbereich der Frontplatte 1.

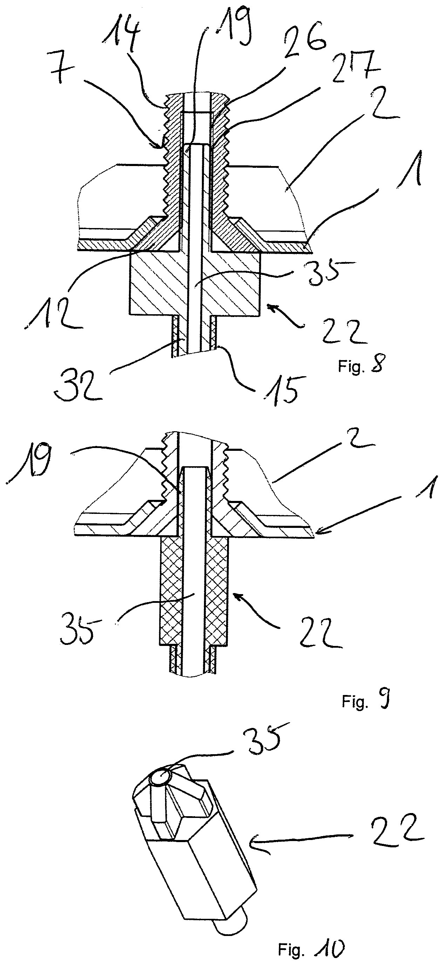

Fig. 8 zeigt einen Schnitt durch den Endbereich einer Hohlschraube. Der Durchströmkanal 9 der Hohlschraube weist in dem, sich an das außenseitige Durchströmkanalende 10 anschließenden Bereich ein Innengewinde 26 auf. Das Zwischenelement 22 weist im Bereich des mit dem Befestigungsmittel 7 zusammenwirkenden Endes ein längliches Hohlelement 19 auf, der das seinerseits mit einem Außengewinde 27 versehen ist. Das längliche Hohlelement 19 des Zwischenelementes 22 wird in den Durchströmkanal 9 eingeführt und hier verschraubt.

In Fig. 9 ist ein Zwischenelement 22 mit einem nach Art einer Gummitülle ausgebildeten länglichen Hohlelement 19 dargestellt. Das längliche Hohlelement 19, das beispielsweise aus einem leicht elastisch verformbaren Kunststoff besteht, hält durch Reibung in dem Durchströmkanal 9.

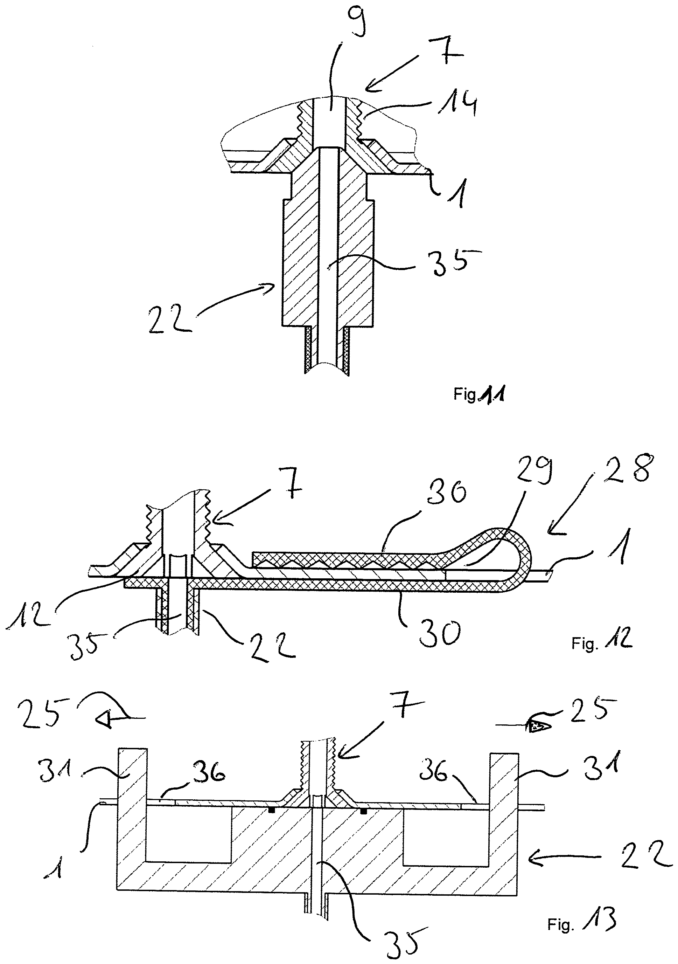

Fig. 10 zeigt eine schräge Draufsicht auf ein nach Art eines Bits bzw. Magnetbits ausgebildetes Zwischenelement 22. Das Zwischenelement 22 kann selbst als Magnet ausgebildet sein. Dann besteht die Hohlschraube aus einem ferromagnetischen Material. Wie Fig. 10 zu entnehmen ist, ist der mit dem Befestigungsmittel 7 zusammenwirkende Bereich des Zwischenelementes 22 hinsichtlich der Form und der Ausgestaltung dem korrespondierenden Bereich, nämlich dem Betätigungsbereich, der Hohlschraube angepasst. Das Befestigungsmittel 7 weist einen Betätigungsbereich mit einem Kreuzschlitz auf, wobei das außenseitige Durchströmkanalende 10 beispielsweise in der Mitte des Kreuzschlitzes angeordnet ist. Durch die korrespondierende Ausgestaltung des Zwischenelementes 22 kann das Befestigungsmittel 7 gut betätigt werden, und es wird eine dichtende Befestigung erzielt. Fig. 11 zeigt das Zwischenelement 22 nach Fig. 10 im an dem Befestigungsmittel 7 befestigten Zustand.

Fig. 12 zeigt einen Schnitt durch ein eine seitliche Klemme 28 aufweisendes Zwischenelement 22. Die Klemme 28 weist zwei zwischen sich einen schlitzförmigen Aufnahmebereich 29 bildende Klemmschenkel 30 auf. Die Klemme 28 ist so durch die Durchströmöffnung 5 in der Frontplatte 1 geführt, dass der untere Klemmschenkel 30 mit der Vorderseite 3 und der obere Klemmschenkel 30 mit der Rückseite 4 der Frontplatte 1 in Kontakt ist und so die beiden Klemmschenkel 30 die Frontplatte 1 klemmend umfassen.

Fig. 13 zeigt ein eine variable Klemmung ermöglichendes Zwischenelement 22. In dem dargestellten Ausführungsbeispiel erfolgt eine Innenklemmung. Das Zwischenelement 22 weist zwei im Abstand zueinander angeordnete Klemmarme 31 auf. Jeder Klemmarm 31 durchfasst mit seinem Endbereich eine Ausnehmung 36 und kann gegen eine in Richtung des Pfeils 25 wirkende Rückstellkraft von dem gegenüberliegenden Klemmarm 31 weg verlagert werden. Der Mechanismus, der eine Verlagerung erlaubt, ist nicht dargestellt.

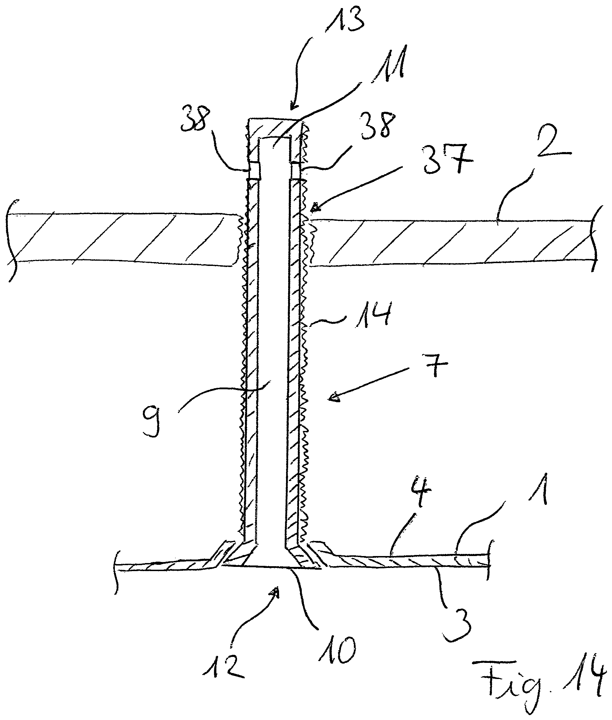

Fig. 14 zeigt ein anderes Ausführungsbeispiel eines als Hohlschraube ausgebildeten Befestigungsmittels 7. Die Hohlschraube mit dem Außengewinde 14 weist einen Durchströmkanal 9 als Durchgang mit einem außenseitigen Durchströmkanalende 10 auf, das auf der Vorderseite 3 der Frontplatte 1 angeordnet ist. Im Bereich der Schraubenspitze 13 ist das innenseitige Durchströmkanalende 11 vorgesehen, wobei sich in dem dargestellten Ausführungsbeispiel das innenseitige Durchströmkanalende 11 in zwei seitlich angeordnete innenseitige Durchströmkanalteilenden 38 verzweigt. Selbstverständlich können auch mehr als zwei innenseitige Durchströmkanalteilenden 38 vorgesehen sein. Die innenseitigen Durchströmkanalteilenden 38 können hinsichtlich ihrer Form und/oder ihrer Ausrichtung unterschiedlich sein.

Wie Fig. 14 zu entnehmen ist, weist die Haltekonstruktion 2 ein Loch 37 mit einem Innengewinde auf, in das die Hohlschraube 13 eingedreht ist. In dem dargestellten Ausführungsbeispiel sind die seitlich angeordneten Durchströmkanalteilenden 38 in dem Bereich der Hohlschraube, der im befestigten Zustand die Haltekonstruktion 2 durchfasst, angeordnet. In dem Schraubenkopf 12 kann beispielsweise ein Schlitz oder ein Kreuzschlitz zum Ansetzen eines Werkzeuges vorgesehen sein. Selbstverständlich kann sich auch das außenseitige Durchströmkanalende 10 in mehrere seitlich angeordnete außenseitige Durchströmkanalteilenden verzweigen, die hinsichtlich ihrer Form und/oder ihrer Ausrichtung unterschiedlich sein können.

Sämtliche Ausgestaltungen des Zwischenelementes 22 weisen eine beidseits offene Durchgangsbohrung 35 auf, durch die ein gasförmiges Medium strömen kann. Wie beispielsweise Fig. 11 zu entnehmen ist, weist das Zwischenelement 22 einen Anschlussstutzen 32 zum Anschluss eines Schlauches 15 auf.

## Patentansprüche

1. Durchlass einer klimatechnischen Anlage zur Be- und/oder zur Entlüftung von Räumen umfassend eine Frontplatte (1) mit einer Vorderseite (3), mit einer Rückseite (4) und mit zumindest einer Durchströmöffnung (5) sowie eine Haltekonstruktion (2), wobei die Frontplatte (1) mittels zumindest eines Befestigungsmittels (7) an der Haltekonstruktion (2) befestigt ist, wobei die Frontplatte (1) zumindest einen durchgehenden Durchströmkanal (9) mit zwei Durchströmkanalenden aufweist, wobei ein Durchströmkanalende des Durchströmkanals (9) bzw. bei mehr als einem Durchströmkanal (9) eines der Durchströmkanäle (9) als außenseitiges Durchströmkanalende (10) auf der Vorderseite (3) der Frontplatte (1) angeordnet ist und das andere Durchströmkanalende als innenseitiges Durchströmkanalende (11) auf der Rückseite (4) der Frontplatte (1) angeordnet ist, **dadurch gekennzeichnet, dass** zumindest ein Durchströmkanal (9) als Durchgang durch das Befestigungsmittel (7) bzw. bei mehr als einem Befestigungsmittel (7) durch eines der Befestigungsmittel (7) gebildet ist, wobei der Durchlass an ein Lüftungssystem in einem Gebäude anschliessbar ist und der Durchlass eine endseitige Komponente darstellt und über den Durchlass Zuluft in den Raum geblasen oder Abluft aus dem Raum abgeführt werden kann.

2. Durchlass nach dem vorhergehenden Anspruch, **dadurch gekennzeichnet, dass** das Befestigungsmittel (7) zumindest die Frontplatte (1) durchfasst.

3. Durchlass nach einem der beiden vorhergehenden Ansprüche, **dadurch gekennzeichnet, dass** das Befestigungsmittel (7) zumindest die Haltekonstruktion (2) durchfasst.

4. Durchlass nach einem der vorhergehenden Anspruch, **dadurch gekennzeichnet, dass** zumindest ein Befestigungsmittel (7) als Hohlschraube mit einem Schraubenkopf (12) und einer Schraubenspitze (13) ausgebildet ist, wobei das außenseitige Durchströmkanalende (10) im Schraubenkopf (12) angeordnet ist.

5. Durchlass nach dem vorhergehenden Anspruch, **dadurch gekennzeichnet, dass** das innenseitige Durchströmkanalende (11) in der Schraubenspitze (13) vorgesehen ist.

6. Durchlass nach einem der vorhergehenden Ansprüche, **dadurch gekennzeichnet, dass** das Befestigungsmittel (7) einen im montierten Zustand der Frontplatte (1) von außen zugänglichen Betätigungsbereich aufweist.

7. Durchlass nach dem vorhergehenden Anspruch, **dadurch gekennzeichnet, dass** das außenseitige Durchströmkanalende (10) in dem Betätigungsbereich angeordnet ist.

8. Durchlass nach einem der vorhergehenden Ansprüche, **dadurch gekennzeichnet, dass** der Durchströmkanal (9) zumindest in dem, sich an das außenseitige Durchströmkanalende (10) anschließenden Bereich ein Innengewinde (26) aufweist.

9. Durchlass nach einem der vorhergehenden Ansprüche, **dadurch gekennzeichnet, dass** das außenseitige Durchströmkanalende (10) durch eine Verschließeinrichtung (18), vorzugsweise eine als Kappe ausgebildete Verschließeinrichtung (18), verschließbar ist.

10. System umfassend einen Durchlass und einen Schlauch, **dadurch gekennzeichnet, dass** der Durchlass nach einem der vorhergehenden Ansprüche ausgebildet ist und dass ein Zwischenelement (22) zur dichtenden Anbringung des Schlauches (15) an dem Befestigungsmittel (7) bzw. bei mehr als einem Befestigungsmittel (7) an einem der Befestigungsmittel (7) vorgesehen ist.

11. System nach dem vorhergehenden Anspruch, **dadurch gekennzeichnet, dass** das Zwischenelement (22) im Bereich des mit dem Befestigungsmittel (7) zusammenwirkenden Endes ein längliches Hohlelement (19) aufweist, das sich im befestigten Zustand in dem Durchströmkanal (9) befindet.

12. System nach dem vorhergehenden Anspruch, **dadurch gekennzeichnet, dass** das längliche Hohlelement (19) eine umlaufende, ringförmig ausgebildete Dichtung (20) aufweist.

13. System nach Anspruch 10, **dadurch gekennzeichnet, dass** das Zwischenelement (22) zur Befestigung in Relation zu dem Befestigungsmittel (7) zumindest einen Magneten (21) aufweist und dass die Frontplatte (1) zumindest in jedem mit einem Magneten (21) zusammenwirkenden Bereich aus einem ferromagnetischen Material und/oder die Hohlschraube aus einem ferromagnetischen Material besteht (bestehen).

14. System nach Anspruch 10, **dadurch gekennzeichnet, dass** das Zwischenelement (22) zur Befestigung in Relation zu dem Befestigungsmittel (7) als Magnet ausgebildet ist und dass die Hohlschraube aus einem ferromagnetischen Material besteht.

15. System nach einem der Ansprüche 10 bis 14, **dadurch gekennzeichnet, dass** der mit dem Befestigungsmittel (7) zusammenwirkende Bereich des Zwischenelementes (22) der Form und/oder der Ausgestaltung des korrespondierenden Bereichs, vorzugsweise des Betätigungsbereichs, des Befestigungsmittels (7) angepasst ist.

16. System nach Anspruch 10, **dadurch gekennzeichnet, dass** das Zwischenelement (22) mit einem Bajonettverschluss in Relation zu dem Befestigungsmittel (7) befestigbar ist.

17. System nach Anspruch 10, **dadurch gekennzeichnet, dass** das Zwischenelement (22) mittels einer Rastverbindung gegenüber dem Befestigungsmittel (7) befestigbar ist.

18. System nach dem vorhergehenden Anspruch, **dadurch gekennzeichnet, dass** das Zwischenelement (22) zumindest zwei, vorzugsweise im Abstand zueinander, und aufeinander zuweisende Rastelemente (23) aufweist, die im befestigten Zustand zumindest einen Teilbereich des Befestigungsmittels (7) bzw. einen Teilbereich der Frontplatte (1) rastend hintergreifen.

19. System nach Anspruch 10, **dadurch gekennzeichnet, dass** das Zwischenelement (22) wenigstens zwei, gegen eine Rückstellkraft voneinander weg verlagerbare Klemmarme (31) zur seitlichen Klemmung eines Teilbereichs der Frontplatte (1) oder des Befestigungsmittels (7) aufweist.

20. System nach Anspruch 10, **dadurch gekennzeichnet, dass** das Zwischenelement (22) zur Befestigung in Relation zu dem Befestigungsmittel (7) eine Klemme (28) umfassend zwei zwischen sich einen schlitzförmigen Aufnahmebereich (29) bildende Klemmschenkel (30) aufweist.

21. System nach einem der Ansprüche 10 bis 20, **dadurch gekennzeichnet, dass** das Zwischenelement (22) im Bereich des mit dem Befestigungsmittel (7) zusammenwirkenden Endes ein längliches, ein Außengewinde (27) aufweisendes Hohlelement (19) aufweist.

22. System nach einem der Ansprüche 10 bis 21, **dadurch gekennzeichnet, dass** das Zwischenelement (22) einen Anschlussstutzen (32) für einen Schlauch (15) aufweist.

## Claims

1. Feedthrough of an air conditioning assembly for the ventilation and air extraction of rooms, comprising a front plate (1) with a front side (3), with a rear side (4), and with at least one throughflow opening (5), as well as a holding structure (2), wherein the front plate (1) is secured to the holding structure (2) by means of at least one securing means (7), wherein the front plate (1) comprises at least one continuous passage throughflow channel (9) with two throughflow channel ends, wherein one throughflow channel end of the throughflow channel (9) or, with more than one throughflow channel (9), one of the throughflow channels (9) is arranged as an outside throughflow channel end (10) on the front side (3) of the front plate (1) and the other throughflow channel end is arranged as an inside throughflow channel end (11) on the rear side (4) of the front plate (1), **characterised in that** at least one throughflow channel (9) is formed as a continuous passage through the securing means (7), or, with more than one securing means (7), is formed by one of the securing means (7), wherein the continuous passage can be connected to a ventilation system in a building, and the continuous passage represents an end-side component, and infeed air can be blown into the room via the continuous passage or discharge air can be conducted out of the room.

2. Feedthrough according to the preceding claim, **characterised in that** the securing means (7) comprises at least one front plate (1).

3. Feedthrough according to any one of the two preceding claims, **characterised in that** the securing means (7) penetrates at least the holding structure (2).

4. Feedthrough according to any one of the preceding claims, **characterised in that** at least one securing means (7) is formed as a hollow screw with a screw head (12) and a screw tip (13), wherein the outside throughflow channel end (10) is arranged in the screw head (12).

5. Feedthrough according to any one of the preceding claims, **characterised in that** the inside throughflow channel (11) is provided in the screw tip (13).

6. Feedthrough according to any one of the preceding claims, **characterised in that** the securing means (7) comprises an actuation region which is accessible from the outside when the front plate (1) is in the installed state.

7. Feedthrough according to the preceding claims, **characterised in that** the outside throughflow channel end (10) is arranged in the actuation region.

8. Feedthrough according to any one of the preceding claims, **characterised in that** the throughflow channel (9) comprises at least one internal thread (26) in the region connecting to the outside throughflow channel end (10).

9. Feedthrough according to any one of the preceding claims, **characterised in that** the outside throughflow channel end (10) can be closed by a closure device (18), preferably by a closure device (18) configured as a cap.

10. System comprising a feedthrough and a hose, **characterised in that** the flowthrough is configured according to any one of the preceding claims, and that an intermediate element (22) is provided for the sealed attachment of the hose (15) to the securing means (7) or, with more than one securing means (7), is provided at one of the securing means (7).

11. System according to the preceding claim, **characterised in that** the intermediate element (22) comprises a longitudinal hollow element (19) in the region of the end interacting with the securing means (7), which is located in the throughflow channel (9) in the secured state.

12. System according to the preceding claim, **characterised in that** the longitudinal hollow element (19) comprises a circumferential seal (20), configured in the form of a ring.

13. System according to claim 10, **characterised in that** the intermediate element (22) comprises at least one magnet (21) for securing in relation to the securing means (7), and that, in each region interacting with a magnet (21), the front plate (1) consists of a ferromagnetic material, and/or the hollow screw consists of a ferromagnetic material.

14. System according to claim 10, **characterised in that** the intermediate element (22) is configured as a magnet for securing in relation to the securing means (7), and that the hollow screw consists of a ferromagnetic material.

15. System according to any one of claims 10 to 14, **characterised in that** the region of the intermediate element (22) interacting with the securing means (7) is adjusted to the shape and/or the design of the corresponding region of the securing means (7), preferably the securing region.

16. System according to claim 10, **characterised in that** the intermediate element (22) can be secured by a bayonet closure fitting in relation to the securing means (7).

17. System according to claim 10, **characterised in that** the intermediate element (22) can be secured in relation to the securing means (7) by means of a snap engagement connection.

18. System according to the preceding claim, **characterised in that** the intermediate element (22) comprises at least two snap engagement elements (23), preferably spaced apart from one another and facing towards one another, which in the secured state engage in snap connection behind at least one part region of the securing means (7) or, respectively, a part region of the front plate (1).

19. System according to claim 10, **characterised in that** the intermediate element (22) comprises at least two clamping arms (31), which can be moved apart from one another against a resetting force, for the lateral clamping of a part region of the front plate (1) or the securing means (7).

20. System according to claim 10, **characterised in that,** for securing in relation to the securing means (7), the intermediate element (22) comprises a clamp (28), which in turn comprises two clamping limbs (30) forming a slot-shaped receiving region (29).

21. System according to any one of claims 10 to 20, **characterised in that** the intermediate element (22) comprises, in the region of the end interacting with the securing means (7), a longitudinal hollow element (19) which comprises an external thread (27).

22. System according to any one of claims 10 to 21, **characterised in that** the intermediate element (22) comprises a connection socket (32) for a hose (15).

## Revendications

1. Canalisation de passage dans une installation technique de climatisation dévolue à l'aération et/ou à la ventilation de locaux, comprenant une plaque frontale (1) munie d'une face antérieure (3), d'une face postérieure (4) et d'au moins un orifice de circulation (5), ainsi qu'une structure de maintien (2), la plaque frontale (1) étant fixée à la structure de maintien (2) à l'aide d'au moins un moyen de fixation (7), ladite plaque frontale (1) comportant au moins un canal ininterrompu de circulation (9) présentant deux extrémités, sachant qu'une extrémité dudit canal de circulation (9), respectivement une extrémité de l'un des canaux de circulation (9), matérialisant une extrémité extérieure (10) en présence de plus d'un canal de circulation (9), est située sur la face antérieure (3) de la plaque frontale (1), et que l'autre extrémité dudit canal de circulation, matérialisant une extrémité intérieure (11), est située sur la face postérieure (4) de ladite plaque frontale (1), **caractérisée par le fait qu'**au moins un canal de circulation (9) est ménagé en tant que couloir parcourant le moyen de fixation (7), respectivement l'un des moyens de fixation (7) en présence de plus d'un moyen de fixation (7), sachant que la canalisation de passage peut être raccordée à un système de ventilation, dans un bâtiment, que ladite canalisation de passage constitue un élément structurel extrême et que, par l'intermédiaire de ladite canalisation de passage, de l'air d'alimentation peut être insufflé dans le local ou de l'air évacué peut être expulsé dudit local.

2. Canalisation de passage selon la revendication précédente, **caractérisée par le fait que** le moyen de fixation (7) traverse au moins la plaque frontale (1).

3. Canalisation de passage selon l'une des deux revendications précédentes, **caractérisée par le fait que** le moyen de fixation (7) traverse au moins la structure de maintien (2).

4. Canalisation de passage selon l'une des revendications précédentes, **caractérisée par le fait qu'**au moins un moyen de fixation (7) est réalisé sous la forme d'une vis creuse comportant une tête (12) et une pointe (13), l'extrémité extérieure (10) du canal de circulation étant située dans la tête (12) de ladite vis.

5. Canalisation de passage selon la revendication précédente, **caractérisée par le fait que** l'extrémité intérieure (11) du canal de circulation est prévue dans la pointe (13) de la vis.

6. Canalisation de passage selon l'une des revendications précédentes, **caractérisée par le fait que** le moyen de fixation (7) est nanti d'une zone d'actionnement accessible de l'extérieur à l'état monté de la plaque frontale (1).

7. Canalisation de passage selon la revendication précédente, **caractérisée par le fait que** l'extrémité extérieure (10) du canal de circulation est située dans la zone d'actionnement.

8. Canalisation de passage selon l'une des revendications précédentes, **caractérisée par le fait que** le canal de circulation (9) est pourvu d'un filetage intérieur (26), au moins dans la région attenante à l'extrémité extérieure (10) dudit canal de circulation.

9. Canalisation de passage selon l'une des revendications précédentes, **caractérisée par le fait que** l'extrémité extérieure (10) du canal de circulation peut être obturée par un dispositif obturateur (18), de préférence un dispositif obturateur (18) réalisé sous la forme d'un capuchon.

10. Système comprenant une canalisation de passage et un tuyau souple, **caractérisé par le fait que** la canalisation de passage est réalisée en conformité avec l'une des revendications précédentes ; et **par le fait qu'**un élément intercalaire (22) est prévu pour l'implantation étanche du tuyau souple (15) sur le moyen de fixation (7), respectivement sur l'un des moyens de fixation (7) en présence de plus d'un moyen de fixation (7).

11. Système selon la revendication précédente, **caractérisé par le fait que** l'élément intercalaire (22) est muni, dans la région de l'extrémité coopérant avec le moyen de fixation (7), d'un élément creux allongé (19) logé, à l'état fixé, dans le canal de circulation (9).

12. Système selon la revendication précédente, **caractérisé par le fait que** l'élément creux allongé (19) est muni d'une garniture périphérique d'étanchement (20) de réalisation annulaire.

13. Système selon la revendication 10, **caractérisé par le fait que** l'élément intercalaire (22) est doté d'au moins un aimant (21), en vue de la fixation par rapport au moyen de fixation (7) ; et **par le fait que** la plaque frontale (1) est constituée d'un matériau ferromagnétique, au moins dans chaque région coopérant avec un aimant (21), et/ou la vis creuse est constituée d'un matériau ferromagnétique.

14. Système selon la revendication 10, **caractérisé par le fait que** l'élément intercalaire (22) est réalisé sous la forme d'un aimant, en vue de la fixation par rapport au moyen de fixation (7) ; et **par le fait que** la vis creuse est constituée d'un matériau ferromagnétique.

15. Système selon l'une des revendications 10 à 14, **caractérisé par le fait que** la région de l'élément intercalaire (22) qui coopère avec le moyen de fixation (7) est adaptée à la forme et/ou à la conception de la région concordante, préférentiellement de la zone d'actionnement dudit moyen de fixation (7).

16. Système selon la revendication 10, **caractérisé par le fait que** l'élément intercalaire (22) peut être fixé, par rapport au moyen de fixation (7), à l'aide d'une fermeture à baïonnette.

17. Système selon la revendication 10, **caractérisé par le fait que** l'élément intercalaire (22) peut être fixé, vis-à-vis du moyen de fixation (7), à l'aide d'une liaison par encliquetage.

18. Système selon la revendication précédente, **caractérisé par le fait que** l'élément intercalaire (22) compte au moins deux éléments encliquetables (23) qui pointent l'un vers l'autre, de préférence à distance l'un de l'autre, et qui emprisonnent respectivement par-derrière avec effet d'encliquetage, à l'état fixé, au moins une région partielle du moyen de fixation (7) ou une région partielle de la plaque frontale (1).

19. Système selon la revendication 10, **caractérisé par le fait que** l'élément intercalaire (22) compte au moins deux bras de serrage (31) pouvant être déplacés à l'écart l'un de l'autre, en opposition à une force de rappel, en vue du serrage latéral d'une région partielle de la plaque frontale (1) ou du moyen de fixation (7).

20. Système selon la revendication 10, **caractérisé par le fait que** l'élément intercalaire (22) est muni, en vue de la fixation par rapport au moyen de fixation (7), d'une pince (28) incluant deux branches de coincement (30) donnant naissance, entre elles, à une zone réceptrice (29) en forme de fente.

21. Système selon l'une des revendications 10 à 20, **caractérisé par le fait que** l'élément intercalaire (22) est pourvu, dans la région de l'extrémité coopérant avec le moyen de fixation (7), d'un élément creux allongé (19) présentant un filetage extérieur (27).

22. Système selon l'une des revendications 10 à 21, **caractérisé par le fait que** l'élément intercalaire (22) est nanti d'un embout de raccordement (32) dédié à un tuyau souple (15).
